# EUROPEAN PATENT APPLICATION

(11) **EP 0 672 858 A1**
(43) Date of publication of application: **20.09.1995**
(21) Application number: 95103570.8
(22) Date of filing: 13.03.1995
(51) Int. Cl.: F16L 33/02

(54) **High strength elastic metal clamp for joining tubes**

(30) Priority: 16.03.1994 IT MI940484
(71) Applicant: C.I.M.A. COMPAGNIA ITALIANA MOLLE ACCIAIO S.P.A., I-20040 Busnago, Milan (IT)
(72) Inventor: Bellazzi, Emilio, I-20052 Monza (Mi) (IT)
(74) Representative: Beneduce, Gianna

(57) **Abstract**

An elastic metal clamp for joining two coaxial tubes is described which provides a secure tightening and is characterized by a strip (1) which has two indentations (8,12) through which tightening is achieved by using a tool, a further identation (11) which, latching by means of a tongue (5) formed in the strip (1) achieves, when tightened, the fixing of the clamp onto the two coaxial tubes.

## Description

The object of the present invention is an elastic metal clamp for joining coaxial tubes and capable of assuring a perfectly tight joint even when highly stressed.

In particular, the elastic metal clamp, object of the invention, is made out of a strip of high strength material, is of substantially cylindrical shape and is suitable for the junction of two coaxial tubes, the external one being made of a sufficiently deformable material so that, when the clamp is tightened, the external tube is squeezed under the pressure so as to assure a perfectly stable jointing of the two coaxial tubes.

There are numerous types of metal clamp on the market: these are essentially cylindrical in shape and generally consist of either a single variously shaped piece of strip or of two pieces siutably joined at the time of their application.

For tightening purposes, some clamps are provided with particulare parts where are present bendings or hooks which assure a click tightening whilst others have variously attached screws which achieve a more gradual tightening effect.

The fundamental requirement of a coaxial tube joint is that of perfect tightness and stability which means that the tightness must be not only perfect as the clamp is applied and in normal operating conditions but even in abnormal conditions caused by vibration, blows, and variations of pressure and temperature of fluids flowing inside the tubes. The joint must also resist pushing action of the jointed tubes and deformation of the material of the external tube caused by aging.

Even in abnormal operating conditions, perfect tightness is assured only when the clamp exerts uniform pressure on the external tube made in deformable material.

Uneven clamping force could bring about a possible undoing of the joint where the clamp pressure is too low and a squeezing of the deformable tube which could cause permanent damage where it is too high.

If the perfect tightness of a joint between two tubes is the fundamental property which must be assured, it is also necessary that the clamp be easy to apply, be simple and quick to install and furthermore be cost effective.

Some metal clamps already on the market have bendings in the strip of even 180°. This kind of bending which is used to form the tightening hooks is possible in relatively deformable materials of low mechanical strength whereas these bendings cannot be formed in higher strength materials even when they have good elasticity.

The metal clamp object of this invention, has a clamp shape such that even high strength materials can be used without compromising the clamp's elasticity and integrity which, in exerting a uniform pressure on the outside deformable tube, assures a perfectly tight and stable joint. The metal clamp of the invention can therefore be used for joints which can be highly stressed. Besides being easy to apply it is economical to produce as it is made by simple strip shearing and drawing operations.

The metal clamp object of the present invention is of an essentially cylindrical form and consists of a strip which has two suitably placed indentations through which tightening is achieved by using a suitable tool, a further indentation which, latching by means of a suitable tongue formed in the strip achieves, when tightened, the fixing of the clamp onto the two coaxial tubes. Finally, a bending in the strip which never at any point exceeds an angle of 90°, produces a wave shape which confers suitable elasticity to the clamp.

For a more detailed illustration of the clamp of the invention, reference is made to the attached drawings which show a preferred embodiment.

Figure 1 shows an axonometric view of the open clamp, before tightening.

Figure 2 shows a frontal view of the clamp, already tightened, with the three portions A-A, B-B and C-C in section according to a median plan of the clamp.

Figure 3 shows a frontal view of the strip forming the clamp, after being opened longitudinally.

Figure 4 shows a section of the strip forming the clamp, after being opened longitudinally, according to a plan perpendicular to the plan of the strip along its longitudinal axis.

Figure 5 shows a plan view of the strip forming the clamp, after being opened longitudinally.

The metal clamp object of the invention is made with one piece of strip (1) of adequate thickness according to the chemical and physical properties of its material and the performance required of the clamp itself.

A bending (2) which has a wave shape and is curved throughout with an angle of less than 90° is formed in the strip (1). Two slots (3 and 4) are formed at the base of the bending, the second of which having a more or less rectangular form with the presence of a tongue (5) having the projecting part (6) slightly rounded.

Another slot (7), rectangular and formed in the strip (1) is positioned between the slot (4) and an indentation (8) formed at the extreme right (in the drawings) of the strip.

The extreme left (in the drawings) of the strip bears the tapered end (9) which is slightly smaller than the niche (10) positioned on the internal face of the clamp in its essentially cylindrical configuration. Finally, the two last indentations (11 and 12) are formed in the strip, (1) both of them, like in indentation (8) with the concavity towards the outside of the clamp.

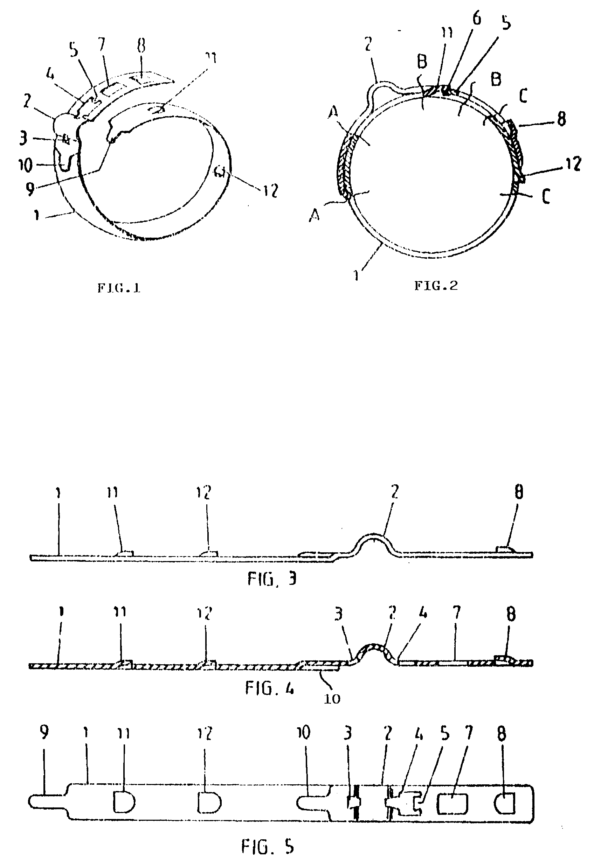

At the time of application, the clamp, open as in Figure 1, is placed around the coaxial tubes, not shown in the drawings. With a suitable tool, in applying leverage to the points represented by the two indentations (8 and 12), the clamp is forced to adhere to the outer coaxial tube made of deformable material, in drawing together the two indentations (8 and 12).

Then, in superimposing the two ends of the clamp, the tapered end (9) being on the inside of the end with the indentation (8) until the tongue (5), after having passed over the indentation (11) latches to it in positioning itself inside, this being facilitated by the rounded end (6) of the tongue (5).

In this tightening position, as indicated in Figure 2, the tapered end (9) inserts itself into the niche (10), in such a way as the clamp adhering to the inside coaxial tube of deformable material, is not only applied to this tube at all points, even that of the bending (2), but is applied without discontinuity which, in its turn, contributes to a uniform distribution of the radial forces.

Tightening in this way is particularly secure and almost impossible to undo. In fact any disengagement between the indentation (11) and the tongue (5) can occur only if they slide backwards one over the other and the tongue (5) raises itself above the indentation (11).

The metal clamp, object of the present invention can be made from strip by simple shearing and indentation stamping.

The material can be any kind of elastic metal.

The clamp of the invention gives, in particular, the possibility of using high strength steel, for example spring steel with a tensile strength greater than 100 kg/mm².

## Claims

1. A high strength elastic metal clamp of substantially cylindrical form, for joining coaxial tubes of which the outer one is in deformable material, characterized by the fact that the clamp consists of a metallic strip (1) having three indentations (8, 11, 12), having concavity towards the outside of the clamp and of which one (8) is positioned at the end of the strip (1) and the other two (11, 12) suitably distanced one from the other; of a suitable wide bending (2), of suitable slots (3, 4, 7), one of which (4), placed between the indentation (8) at the end of the strip (1) and the bending (2), has a rounded tongue (5) extending towards the bending (2) and resulting in the tongue (5) being engaged when the clamp is closed, with the hole of the indentation (11), which is positioned, in moving down the strip from the clamp, in the furthest position with respect to the said bending (2), the other end (9) of the strip (1) being suitably tapered and which, when the clamp is tightened, places itself into a well fitting niche (10) set on the inside of the clamp strip.

2. A metallic clamp according to claim 1, characterized by the fact that the wide bending (2) has an angle of less than 90° at all points.

3. A metallic clamp according to claims 1 or 2, characterized by the fact that the slots are three in number (3, 4, 7) of which two (4, 7) are set near the end of the strip (1) bearing an indentation (8) and the bending (2) and the third one (3) on the opposite side of the bending (2).
